# EUROPÄISCHE PATENTSCHRIFT

(11) **EP 1 786 660 B1**
(45) Veröffentlichungstag und Bekanntmachung des Hinweises auf die Patenterteilung: **09.01.2008**
(21) Anmeldenummer: 05788867.9
(22) Anmeldetag: 06.09.2005
(51) Int. Cl.: B62D 25/08, B60G 15/06

(54) **FEDERBEINDOM IN EINER KAROSSERIESTRUKTUR EINES KRAFTFAHRZEUGES**
SUSPENSION STRUT TOP MOUNTING IN A BODY STRUCTURE OF A MOTOR VEHICLE
DOME DE JAMBE DE SUSPENSION DANS LA STRUCTURE DE CARROSSERIE D'UN VEHICULE A MOTEUR

(30) Priorität: 09.09.2004 DE 102004043570
(43) Veröffentlichungstag der Anmeldung: 23.05.2007
(73) Patentinhaber: ThyssenKrupp Stahl AG, 47166 Duisburg (DE)
(72) Erfinder: HAMPE, René, 45478 Mülheim an der Ruhr (DE); PATBERG, Lothar, 47445 Moers (DE)
(74) Vertreter: Cohausz & Florack
(86) Internationale Anmeldenummer: PCT/EP2005/009558
(87) Internationale Veröffentlichungsnummer: WO 2006/027208

(56) Entgegenhaltungen:
- DE-A1- 19 630 647
- DE-A1- 19 941 907
- FR-A- 2 221 295

## Beschreibung

Die Erfindung betrifft eine Karosseriestruktur eines Kraftfahrzeuges, die von als Hohlprofile ausgebildeten Längs- und Querträgern gebildet ist und einen Federbeindom aufweist, der als Schale aus Stahlblech mit einer Blechverstärkung im Abstützbereich des Federbeins ausgebildet ist und einen Verbindungsknoten für angrenzende Hohlprofile der Karosseriestruktur bildet.

Karosseriestrukturen von Kraftfahrzeugen, die von als Hohlprofil ausgebildeten Längs- und Querträgern gebildet sind und einen Federbeindom aufweisen, sind in verschiedenen Ausführungen bekannt.

Bei einer bekannten Karosseriestruktur (JP 2003137132 A) ist ein bogenförmig verlaufender Längsträger mit Hutprofil an einem oberen und unteren Längsträger seitlich angeschlossen und bildet ein Teil eines Radkastens. Ein solcher Federbeindom leistet keinen wesentlichen Beitrag zur Versteifung der Karosseriestruktur und zum Crashverhalten des Kraftfahrzeuges. Das bedeutet, dass die übrigen Teile der Fahrzeugstruktur entsprechend stark dimensioniert sein müssen. Das führt zu einem erhöhten Fahrzeuggewicht.

Bei einer bekannten Karosseriestruktur der eingangs genannten Art (DE 196 30 647 A) ist der Federbeindom als einschaliges Raumformteil ausgebildet. Zur Erhöhung der Steifigkeit der Karosseriestruktur trägt der Federbeindom nur unwesentlich bei.

Schließlich ist ein Tragaufbau für ein Federbein eines Kraftfahrzeuges bekannt (DE 199 41 907 A1), das aus einem äußeren schalenförmigen Teil und einem daran angeschlossenen teilweise schalenförmigen inneren Teil besteht. Beide Teile sind an ihren Rändern miteinander verbunden. Das innere Teil dient zur Verstärkung des äußeren Teils. Bei einem solchen Tragaufbau ist das innere Teil aber im Abstützbereich des Federbeins ausgespart, so dass die gesamte Stützlast vom äußeren Teil übernommen werden muss. Deshalb ist die Stützfunktion, aber auch die Verbesserung der Steifigkeit der Karosseriestruktur insgesamt, durch einen solchen Tragaufbau nicht gegeben.

Der Erfindung liegt die Aufgabe zugrunde, eine Karosseriestruktur der eingangs genannten Art zu schaffen, bei der die Steifigkeit der Karosseriestruktur durch den Federbeindom verbessert ist, ohne dass damit eine wesentliche Erhöhung des Fahrzeuggewichtes verbunden ist.

Diese Aufgabe wird bei einer Karosseriestruktur der eingangs genannten Art dadurch gelöst, dass der Federbeindom aus zwei Halbschalen gebildet ist, die unter Bildung eines Hohlraums zwischen sich im Abstützbereich des Federbeindoms aneinanderliegen und an ihren Außenrändern miteinander verbunden sind.

Die Vorteile der Erfindung liegen darin, dass der Federbeindom aufgrund seiner Integration in die Fahrzeugstruktur und seiner beiden einen Hohlraum zwischen sich bildenden Halbschalen die Steifigkeit und damit das Crashverhalten der Karosseriestruktur des Kraftfahrzeuges wesentlich verbessert. Diese höhere Steifigkeit der Karosseriestruktur im Bereich des Federbeindoms wird durch die beiden einen Hohlraum zwischen sich bildenden Halbschalen erzielt und nicht etwa durch entsprechend höheren Materialeinsatz erzielt. Da wegen der beiden im Abstützbereich des Federbeindoms aneinander liegenden Bereiche der Halbschalen sich eine Verstärkung für das Federbein im Abstützbereich ergibt, entfällt die sonst übliche Blechdoppelung im Abstützbereich, die den Herstellungsaufwand erhöht.

Um den im Radkasten für den Federbeindom zur Verfügung stehenden Raum im Sinne einer Erhöhung der Steifigkeit der Karosseriestruktur optimal zu nutzen, sieht eine Ausgestaltung der Erfindung vor, dass die Verbindung der Außenränder der beiden Halbschalen überstandslos ist. Raum, der sonst für die äußere Verbindungsflansche der Halbschalen beansprucht wird, steht deshalb dem Federbeindom zur Verfügung.

Die erfindungsgemäße Karosseriestruktur bildet aufgrund der Ausbildung des Federbeindoms als Verbindungsknoten für angrenzende Hohlprofile ein hochintegratives Bauteil in der Karosseriestruktur. Es leistet deshalb auch einen Beitrag zum Crashverhalten. Für den Anschluss der Hohlprofile der Karosseriestruktur an den Verbindungsknoten gibt es verschiedene Möglichkeiten. Vorzugsweise umgreifen die Enden den als Verbindungsknoten dienenden Federbeindom teilweise und sind an ihm stoffschlüssig angeschlossen. Alternativ können die Hohlprofile der Karosseriestruktur aber auch von dem als Verbindungsknoten dienenden Federbeindom umschlossen und mit ihm stoffschlüssig verbunden sein.

Im folgenden wird die Erfindung anhand einer Ausführungsbeispiele schematisch darstellenden Zeichnung näher erläutert. Im einzelnen zeigen:
- Fig. 1: eine Karosseriestruktur mit integriertem Federbeindom für ein Vorderrad im Ausschnitt in isometrischer Darstellung,
- Fig. 2: den Federbeindom nach Fig. 1 im Querschnitt nach Linie A-A,
- Fig. 3: eine Karosseriestruktur mit integriertem Federbeindom für ein hinteres Fahrzeugrad im Ausschnitt in isometrischer Darstellung,
- Fig. 4 a-c: verschiedene Anschlüsse von Hohlprofilen an den Federbeindom der Karosseriestruktur in isometrischer Darstellung, und
- Fig. 5: den an einen Längsträger der Fahrzeugstruktur angeschlossenen Federbeindom oben vor und unten nach einem Crash.

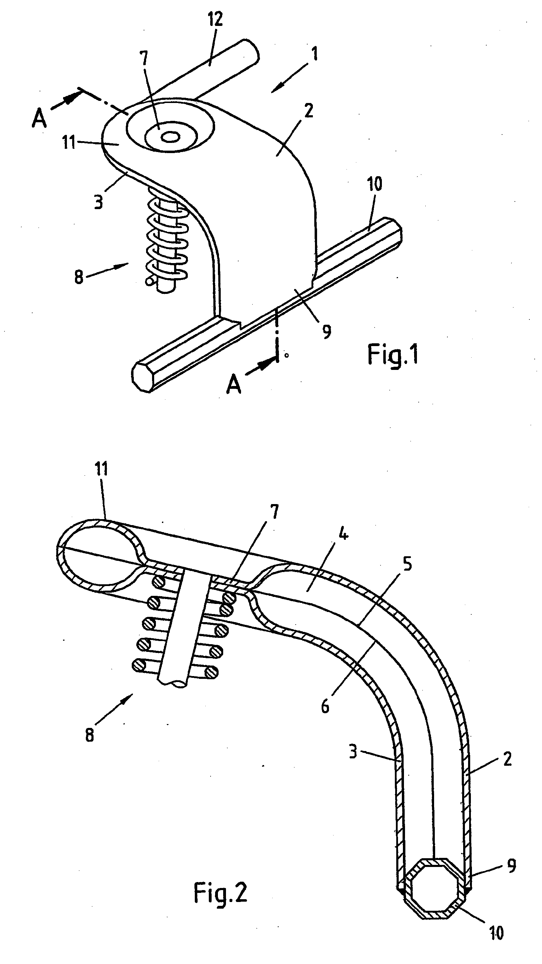

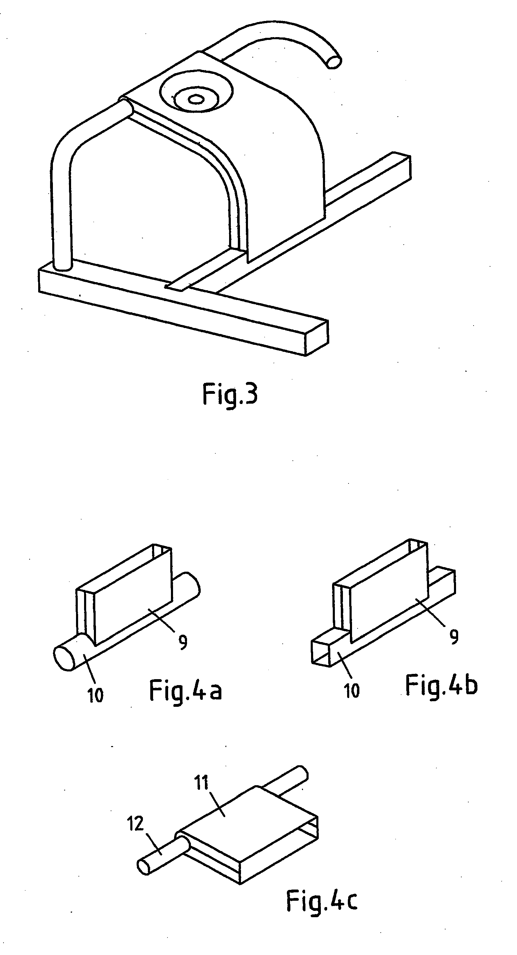

Der in Fig. 1 und 2 dargestellte Federbeindom 1 in einer Karosseriestruktur eines Fahrzeuges ist von zwei Halbschalen 2, 3 gebildet, die zwischen sich einen Hohlraum 4 bilden, in dem sie mit ihren Außenrändern 5, 6 stumpf aufeinanderstoßen und fest, insbesondere stoffschlüssig, miteinander verbunden sind. Im Abstützbereich 7 eines Federbeins 8 sind die beiden Halbschalen 2, 3 eingezogen und liegen flach aufeinander. Mit einem unteren Ende 9 wird ein als Hohlprofil 10 ausgebildeter Längsträger teilweise umschlossen. In diesem Bereich ist das Ende 9 des Federbeindoms 1 und das Hohlprofil 10 stoffschlüssig, z.B. durch Schweißen, verbunden. Am oberen Ende 11 des Federbeindoms 1 ist seitlich ein oberer, ebenfalls als Hohlprofil 12 ausgebildeter Längsträger entsprechend angeschlossen. Je nach Form der Hohlprofile 10, 12 sind die Anschlüsse ausgebildet. In den Ausführungsbeispielen der Fig. 4a, 4b sind seitliche Anschlüsse dargestellt. Im Ausführungsbeispiel der Fig. 4c ist dargestellt, dass der obere Längsträger 12 durch das Ende 11 des Federbeindoms 1 hindurchgeführt und von diesem umschlossen ist.

Fig. 3 zeigt eine Ausführung für den Federbeindom eines hinteren Fahrzeugrades. Hier sind für den unteren Längsträger der Anschluss der Fig. 4b und für den oberen Längsträger der Anschluss der Fig. 4c realisiert.

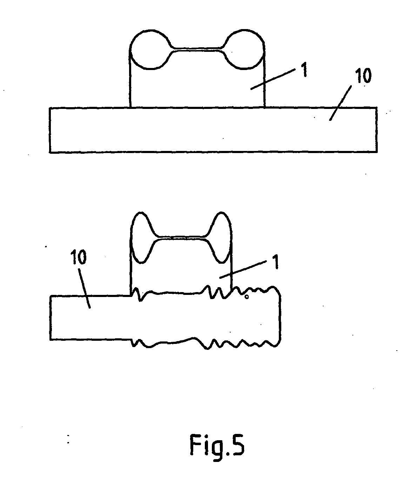

Aus der Gegenüberstellung des Federbeindoms 1 mit unterem Längsträger in Fig. 5 ist ersichtlich, dass im Falle eines Crashs der Federbeindom 1 im Bereich der Hohlräume an der Stauchung des Hohlprofils 9 des Längsträgers teilnimmt.

## Patentansprüche

1. Karosseriestruktur eines Kraftfahrzeuges, die von als Hohlprofile ausgebildeten Längs- und Querträgern (10, 12) gebildet ist und einen Federbeindom (1) aufweist, der als Schale aus Stahlblech mit einer Blechverstärkung im Abstützbereich (7) des Federbeins (8) ausgebildet ist und einen Verbindungsknoten für angrenzende Hohlprofile (10, 12) der Karosseriestruktur bildet,
**dadurch gekennzeichnet, daß**
der Federbeindom (1) aus zwei Halbschalen (2, 3) gebildet ist, die unter Bildung eines Hohlraums (4) zwischen sich im Abstützbereich (7) des Federbeins (8) aneinanderliegen und an ihren Außenrändern (5, 6) fest miteinander verbunden sind.

2. Karosseriestruktur nach Anspruch 1,
**dadurch gekennzeichnet, daß**
die Verbindung der Außenränder (5, 6) der beiden Halbschalen (2, 3) überstandslos ist.

3. Karosseriestruktur nach Anspruch 2,
**dadurch gekennzeichnet, daß**
die Außenränder (5, 6) stumpf aneinanderstoßen.

4. Karosseriestruktur nach einem der Ansprüche 1 bis 3,
**dadurch gekennzeichnet, daß**
die Hohlprofile (10, 12) der Karosseriestruktur mit ihren Enden den als Verbindungsknoten dienenden Federbeindom (1) teilweise umgreifen und stoffschlüssig angeschlossen sind.

5. Karosseriestruktur nach einem der Ansprüche 1 bis 3,
**dadurch gekennzeichnet, daß**
die Hohlprofile (10, 12) der Karosseriestruktur von dem als Verbindungsknoten dienenden Federbeindom (1) umschlossen und mit ihm stoffschlüssig verbunden sind.

## Claims

1. Body structure of a motor vehicle, which is formed from longitudinal and transverse load-bearing members (10, 12) designed as hollow profiles and has a suspension strut dome (1), which is formed as a shell element made of sheet steel with a sheet metal reinforcement in the support area (7) of the suspension strut (8) and forms a connection node for adjacent hollow profiles (10, 12) of the body structure,
**characterised in that**
the suspension strut dome (1) is formed from two half-shell elements (2, 3), which are in contact with one another, such as to form a hollow space (4) between them, in the support area (7) of the suspension strut (8), and are securely connected to one another at their outer edges (5, 6).

2. Body structure according to Claim 1,
**characterised in that**
the connection between the outer edges (5, 6) of the two half-shell elements (2, 3) has no overlap.

3. Body structure according to Claim 2,
**characterised in that**
the outer edges (5, 6) abut one another flatly.

4. Body structure according to any one of Claims 1 to 3,
**characterised in that**
the hollow profiles (10, 12) of the body structure partially engage with their ends around the suspension strut dome (1) serving as a connection node and are connected by substance-to substance bonds.

5. Body structure according to any one of Claims 1 to 3,
**characterised in that**
the hollow profiles (10, 12) of the body structure are surrounded by the suspension strut dome (1) serving as a connection node and are connected to it by substance-to substance bonds.

## Revendications

1. Structure de carrosserie d'un véhicule automobile qui se compose de profilés creux sous forme de longerons et de traverses (10, 12) et qui présente un dôme de jambe de suspension (1) qui est formé d'une coquille en tôle d'acier présentant un renforcement de tôle dans la zone d'appui (7) de la jambe de force (8) et forme un noeud de liaison pour des profilés creux voisins (10, 12) de la structure de carrosserie, **caractérisée en ce que** le dôme de jambe de suspension (1) est formé de deux demi-coquilles (2, 3) qui s'appliquent l'une contre l'autre dans la zone d'appui (7) de la jambe de force (8) en formant entre elles une cavité (4) et qui sont liées entre elles de façon rigide à leurs bords extérieurs (5, 6).

2. Structure de carrosserie selon la revendication 1, **caractérisée en ce que** la liaison des bords extérieurs (5, 6) des deux demi-coquilles (2, 3) est sans parties protubérantes.

3. Structure de carrosserie selon la revendication 2, **caractérisée en ce que** les bords extérieurs (5, 6) sont en contact bout à bout.

4. Structure de carrosserie selon l'une quelconque des revendications 1 à 3, **caractérisée en ce que** les profilés creux (10, 12) de la structure de carrosserie embrassent partiellement avec leurs extrémités le dôme de jambe de suspension (1) servant de noeud de liaison et sont liés par matière.

5. Structure de carrosserie selon l'une quelconque des revendications 1 à 3, **caractérisée en ce que** les profilés creux (10, 12) de la structure de carrosserie sont entourés par le dôme de jambe de suspension (1) servant de noeud de liaison et sont liés par de la matière à celui-ci.
